# EUROPÄISCHE PATENTANMELDUNG

(11) **EP 1 936 452 A1**
(43) Veröffentlichungstag der Anmeldung: **25.06.2008**
(21) Anmeldenummer: 07024786.1
(22) Anmeldetag: 20.12.2007
(51) Int. Cl.: G05B 19/042, G06F 9/00, G06F 17/50

(54) **Verfahren und Vorrichtung zur dynamischen Behandlung von Objekten eines Simulationsmodells**

(30) Priorität: 21.12.2006 DE 102006061796
(71) Anmelder: dSPACE digital signal processing and control engineering GmbH, 33100 Paderborn (DE)
(72) Erfinder: Wölfer, Thomas, 33098 Paderborn (DE); Richert, Jobst Dr.-Ing., 59558 Lippstadt (DE); Bruski, Nicola Dr. rer. nat., 33102 Paderborn (DE); Krisp, Holger, 30890 Barsinghausen (DE); Grosse Börger, Ralf, 33102 Paderborn (DE); Leinfellner, Robert, 33098 Paderborn (DE); Miller, Eduard, 33154 Salzkotten (DE)

(57) **Zusammenfassung**

Beschrieben und dargestellt ist ein Verfahren und eine Vorrichtung zur dynamischen Behandlung von Objekten in einem Testaufbau, wobei der Testaufbau aus mindesteus zwei bidirektional austauschenden Systemen und wenigstens einem weiteren, zu testenden System besteht, wobei Objekte einer ersten Art zu einem auf einem ersten System aufgeführten Umgebungsmodell gehören und diese Objekte von einem Testmodell verarbeitet werden können.

Das erfindungegemäße Verfahren verhindert die aus dem Stand der Technik bekannten Nachteile, indem zu den Objekten der ersten Art typengleiche oder typenähnliche Objekte einer zweiten Art erzeugt werden und die Objekte einer ersten und einer zweiten Art mittels einer Management-Vorrichtung wenigstens einem der Systeme zur Verfügung gestellt werden.

## Beschreibung

Die Erfindung betrifft ein Verfahren zur dynamischen Behandlung von Objekten in einem Testaufbau, wobei der Testaufbau aus mindestens zwei bidirektional austauschenden Systemen und wenigstens einem weiteren, zu testenden System besteht, wobei Objekte einer ersten Art zu einem auf einem ersten System ausgeführten Umgebungsmodell gehören und diese Objekte von einem Testmodell verarbeitet werden. Ferner betrifft die Erfindung eine Management-Vorrichtung zur Behandlung von Objekten.

Verfahren und Vorrichtungen von Testaufbauten zum Test eines Systems sind aus der Praxis in verschiedener Form bekannt und werden vor allem in der angewandten Forschung und der industriellen Entwicklung in dem weiten Feld der Entwicklung und dem Einsatz elektronischer Systeme verwendet. Weite Verbreitung findet diese Anwendung überall dort, wo im weitesten Sinne Prozesssteuerungsaufgaben gelöst werden müssen. Der Begriff "Steuerungssystem" wird im folgenden als umfassende Bezeichnung für eine technische Einrichtung verwendet, die im wesentlichen für die Aufgaben Messen, Steuern, Regeln, Kalibrieren eingesetzt wird. Im weitesten Sinne handelt es sich dabei generell um ein elektronisches, programmsteuerbares System, das z.B. im Bereich automotiver Anwendungen Steuergerät genannt wird. Der Begriff "Steuerungssystem" ist nicht auf das beschränkt, was im systemtheoretischen Sinne einengend als Steuerung definiert wird, üblicherweise werden Regelungen auf Steuerungssystemen implementiert.

Zu Gunsten einer besseren Verständlichkeit wird die Verdeutlichung des der Erfindung zu Grunde liegenden Gedanken an Hand eines im automotiven Kontext eingesetzten Steuergeräts vorgenommen. Dies stellt keine Einschränkung des Erfindungsgedanken auf das Anwendungsgebiet dar.

Wesentliche Kennzeichen eines derartigen Testaufbaus sind das Vorhandensein wenigstens zweier ähnlicher Einzelsysteme, die oftmals - aber nicht zwangsweise - autonom re- und agieren können, einer - üblicherweise - bidirektionalen Datenverbindung sowie eine spezifische systembedingte Abhängigkeit zwischen den Systemen. Eine derartige systembedingte Abhängigkeit entsteht beispielsweise durch den Betrieb eines komplexen Umgebungsmodells auf einer verteilten Testvorrichtung; hier wird deutlich, dass ein auf mehreren Testvorrichtungen ausgeführtes Gesamtmodell einen kontextuellen (systembedingten) Zusammenhang aufweist. Andere Abhängigkeitsformen, beispielsweise ein die Ausführung überwachendes Experimentier-System (im Folgenden als Experimentier-PC bezeichnet) und ein zur Ausführung geeignetes Testsystem (im Folgenden als Testvorrichtung bezeichnet), sind ebenfalls denkbar.

Als Umgebungsmodell werden im Folgenden eine spezifische Algorithmik darstellende Programme bezeichnet, die in einem speziell vorgesehenen Kontext Funktionalität repräsentieren und - mittels geeigneter Simulations-Software - mit weiteren Systemen, beispielsweise Steuerungssystemen dergestalt wechselwirken, dass die Funktionen des Steuerungssystems erkennbar werden. Ein bekanntes Beispiel stellt etwa ein Umgebungsmodell zum Test eines automobilen Motorsteuergeräts dar; hier repräsentiert das Umgebungsmodell einen durch das Steuergerät gesteuerten Motor in einer für die Funktion des Steuergeräts notwendigen Detailtreue. Das Umgebungsmodell bedient die Sensorik des Steuergeräts und reagiert (virtuell) auf die Aktorik des Steuergeräts. Nicht zwangsweise muss ein Umgebungsmodell direkt mit einem Steuerungssystem interagieren; denkbar ist auch, dass - in erweiterter Fassung des genannten Beispiels - ein Motorsteuergerät an einen zu testenden Motor angeschlossen ist; dieser wiederum ist an ein erweitertes Umgebungsmodell eines Fahrzeugs angeschlossen, welches z.B. ein Getriebe oder ein Fahrwerk mit zugehöriger Sensorik, Aktorik und Funktionalität repräsentiert.

Die Entwicklung eines letztlich in der Serienfertigung einsetzbaren Steuerungssystems vollzieht sich meist in den folgenden Schritten: In der Funktionsentwicklung wird mit Hilfe von mathematischen Modellierungswerkzeugen zunächst ein von der späteren Zielhardware und -umgebung abstrakter Reglerentwurf vorgenommen, wobei der so entwickelte Regler lediglich in einer Simulation mit dem ebenfalls nur als mathematisches Modell existierenden Prozessabbild erprobt wird.

In einem nächsten Schritt, bei dem sogenannten Rapid Control Prototyping (RCP), wird der abstrakte Reglerentwurf mit Hilfe von Code-Generatoren in ein ausführbares Programm übersetzt, das auf einem üblicherweise sehr leistungsstarken - und mit dem letztlich zum Einsatz kommenden Serien-Steuerungssystem nicht vergleichbaren - echtzeitfähigen Steuerungssystem betrieben wird. Dieses RCP-Steuerungssystem interagiert dann über entsprechende I/O-Schnittstellen mit dem realen zu beeinflussenden Prozess. Sind diese Ergebnisse zufriedenstellend, wird wiederum über entsprechend ausgestattete Code-Generatoren aus dem mathematischen Modell des Reglers ausführbarer Code für das Serien-Steuerungssystem generiert, so dass das in der Serienanwendung tatsächlich zum Einsatz kommende Steuerungssystem mit der Funktionalität ausgestattet werden kann, mit der es auch in der Serienanwendung ausgestattet sein muss.

Bevor das Serien-Steuerungssystem jedoch im Zusammenhang mit dem realen Prozess erprobt wird, wird es eingehenden Tests unterzogen, sogenannten Hardware-in-the-Loop-Tests (HIL-Tests). Bei HIL-Tests wird das (Serien-)Steuerungssystem mit einer Testvorrichtung verbunden, wobei auf der Testvorrichtung mit Hilfe eines Umgebungsmodells die funktionale Umgebung des zu testenden Steuerungssystems simuliert wird; das Steuerungssystem wechselwirkt also mit einer virtuellen Umgebung, indem das Umgebungsmodell durch Ausgabe von Umgebungsmodelldaten über die Testvorrichtung an das Steuerungssystem und durch Aufnahme von Steuerungssystemdaten aus dem Steuerungssystem über einen Datenkanal mit der Testvorrichtung in Verbindung steht.

Bei dem Steuerungssystem kann es sich beispielsweise im Bereich automotiver Anwendungen um ein Motor-Steuergerät handeln, wobei das Umgebungsmodell dieses MotorSteuergeräts dann ein Motor-Modell ist, das in Echtzeit auf der Testvorrichtung betrieben wird. Genauso könnte es sich aber auch um ein fahr- und motordynamisches Modell eines ganzen Fahrzeugs handeln, das in einer virtuellen Umgebung bewegt wird. Das Umgebungsmodell muß grundsätzlich nicht alle Schnittstellen des zu testenden Steuerungssystems abdecken, vielmehr können auch beliebige Teile der Umgebung durch reale Komponenten implementiert sein. Im vorangehenden Beispiel könnte dies bedeuten, dass das zu testende Steuerungssystem tatsächlich mit einem realen Verbrennungsmotor verbunden ist, wobei die Umgebung des Motors (z. B. Getriebe, Antriebsstrang, Fahrgestell und Straße) mit Hilfe eines auf der Testvorrichtung betriebenen Umgebungsmodells nachgebildet ist. Das Umgebungsmodell muss also kein vollständiges Umgebungsmodell sein, es kann direkt und/oder indirekt mit dem zu testenden Steuerungssystem in Verbindung stehen.

Im Rahmen der Entwicklung solcher Umgebungsmodelle ist es heutzutage üblich, derartige Modelle in einer Modellierungsumgebung zu erstellen - hierzu ist beispielsweise der Einsatz MatLab/ Simulink (TheMathworks Inc.: "Simulink 6.5 (R2006b)"; September 2006) weit verbreitet. In einer solchen Modellierungsumgebung wird mit Hilfe von so bezeichneten "Blöcken" die Funktionalität des Umgebungsmodells notiert; Verbindungselemente stellen einen Kontroll- und/ oder Datenfluss dar. Um ein erstelltes Modell in einem Testaufbau sinnvoll nutzen zu können, muss das Modell in übersetzter Form auf einem geeigneten System zur Ausführung gebracht werden. Da auf Grund üblicher Dimensionen solcher Umgebungsmodelle von mehreren Tausend Blöcken die Compile-Zeit mitunter mehrere Stunden dauern kann, ist insbesondere mangelnde Flexibilität von größeren Umgebungsmodellen - abgesehen von Methoden der Parametrierung - als Nachteil anzusehen.

Zur Übersetzung von Programm-Code zur Ausführung auf solchen Rechensystemen, die häufig ohne benutzertaugliche Schnittstellen, wie beispielsweise Monitor oder Tastatur, in einem elektrotechnischen/ mechatronischen System zum Einsatz kommen, ist es in der Regel notwendig, die Eigenschaften der Rand- und Rahmenbedingungen des Zielrechensystems exakt zu beschreiben, da häufig die erzeugten Programme direkt im Zielrechensystem ausgeführt werden und nicht, wie von der Programmausführung auf herkömmlichen Personalcomputern bekannt, in einer geschützten Umgebung im Betriebssystem ablaufen. Üblicherweise entsprechen die zur Ausführung von Umgebungsmodellen geeigneten Systeme solchen Rechensystemen; hier handelt es sich häufig um speziell zur Simulation geeignete Systeme mit spezifischen Hardwareelementen wie z.B. Anschlüsse für Sensorik oder Aktuatorik.

Bedingt durch die feststehenden Rahmenbedingungen des Zielrechensystems, die Rechnerarchitektur solcher Zielsysteme und die Prozessor-nahe Kompilierung des auszuführenden Programm-Codes - hier ein Umgebungsmodell -, gilt die Ausführung in einem solchen Zielrechensystem gemeinhin als deterministisch; also einerseits die Reproduzierbarkeit einer Ausführung gewährleistet ist, andererseits bereits vor Ausführung bestimmbar ist, unter Berücksichtigung welcher Komponenten des Systems die Ausführung stattfindet.

Im Rahmen des beschriebenen Testaufbaus ist es weit verbreitet, dass mittels eines Experimentier-PCs und einer geeigneten Software, beispielsweise ControlDesk (dSPACE GmbH: "ControlDesk 3.0"; Release 5.2 vom 14. Dezember 2006), die Reaktionen des zu testenden Steuergeräts überwacht werden; ferner ist denkbar, dass mittels einer anderen geeigneten Software, beispielsweise AutomationDesk (dSPACE GmbH: "AutomationDesk 1.4"; Release 5.2 vom 14. Dezember 2006), das Umgebungsmodell gezielt beeinflusst wird, um Reaktionen des zu testenden Steuergeräts in erschöpfender Breite ermitteln zu können. Diese gezielte Beeinflussung des Umgebungsmodells bedarf einer hinreichenden Kenntnis der Struktur des Umgebungsmodells, insbesondere der Speicherorte der einzelnen Variablen des Umgebungsmodells.

Der Determinismus der Ausführung ermöglicht, bereits vor Ausführung des Umgebungsmodells auf einem spezifischen Zielrechensystem - einer Testvorrichtung - Kenntnis über diese Speicherorte zu erlangen. Dazu wird zum Zeitpunkt des Kompilierens eine Beschreibung des Modells, beinhaltend die Modell-Blöcke, Aus- und evtl. Eingänge mit zugehörigen physikalischen Speicherorten, sowie eventuelle weitere Informationen, erzeugt. Im erweiterten Sinn der vorliegenden Erfindung werden die einzelnen Einträge der Beschreibung im Folgenden stellenweise als Objekte einer ersten Art bezeichnet.

Idealerweise korrespondiert die Beschreibung mit den in der Modellierungsumgebung verwendeten Bezeichnungen für einzelne Bestandteile (Blöcke), und gibt die Modellstruktur (insbesondere z.B. Subsysteme) wieder, so dass identische oder zumindest näherungsweise vergleichbare Bezeichnungen für eine verbesserte Wiedererkennung sorgen, wenn eine solche Beschreibung in z.B. oben beschriebenen Programmen (Control-Desk, AutomationDesk, ...) verwendet wird.

Beispielhaft sei eine mögliche Form der Beschreibung angeführt für ein simples Block-Modell, bestehend aus zwei Eingängen, einem Additionsblock und einem Ausgabeblock. Der Kontrollfluss sieht vor, dass die den Eingangsblöcken zur Verfügung gestellten Werte im Multiplikationsblock multipliziert werden und anschließend auf den Ausgabeblock ausgegeben werden. Die Syntax der folgenden Beschreibung ist rein beispielhaft.

Die einzelnen Elemente einer solchen Beschreibung werden hier durch geschweifte Klammern voneinander abgegrenzt; zur Verdeutlichung sind Attribute einzelner Objekte beigefügt.

```
 {simple.mod
    { in_01: int//0×00004314 }
    { in_02: int(const[1])//0×00004324 }
    { op_block_01: int//0×00004346
      : method=multiply }
    { out _01: int//0×00004628 }
 }
```

In der aufgeführten Beschreibung finden sich vier Objekte, jedes repräsentiert einen Block im Modell. Wird dieses Modell auf einer Testvorrichtung ausgeführt, so kann unter Kenntnis der in der Beschreibung referenzierten Blockbezeichner, beispielsweise "simple.mod.in_01" , dieser Bezeichner verwendet werden; der zugehörige physikalische Speicherbereich wird rechnergestützt aufgelöst und anschließend - je nach Aufgabenstellung - ausgelesen oder modifiziert. Ein übliches Verfahren ist beispielsweise dem Aufgabenkomplex der Kalibrierung entnommen; hier wird ein in einer Experimentier-Vorrichtung existenter künstlicher Schieberegler - beispielsweise ein per Computer-Maus steuerbarer Schieberegler mit einem festgelegten Wertebereich - mit dem aus der Beschreibung bekannten Objekt "simple.mod.in_02", eine Konstante vom Typ "integer" mit dem Initialwert 1, verknüpft; die Auflösung der tatsächliche physikalischen Speicheradresse übernimmt das Experimentier-System.

Dieses Verfahren ist im Stand der Technik seit längerem hinreichend bekannt und dokumentiert. Im Folgenden wird exemplarisch auf die Verwendung dieser Informationen eingegangen.

In einem Test etwa würde eine solche Beschreibung dazu dienen, mittels einer Überwachungs- oder Experimentier-Software - z.B. ControlDesk oder AutomationDesk - unter Kenntnis der physikalischen Speicherorte der Variablen des Umgebungsmodells diese gezielt durch Überschreiben zu beeinflussen oder zu lesen, um erwünschte Reaktionen der zu testenden Einheit - z.B. ein Steuergerät - zu ermitteln. Die Entwicklung von Testmodellen oder die Lösung weiterer Aufgaben im Zusammenhang des gesamten Experiments wird durch Verwendung von durchgängig gleichen Bezeichnern wesentlich erleichtert.

In der Praxis hat sich bewährt, diese die Bezeichner beinhaltende Beschreibung vom Modell separiert zur Verfügung zu stellen.

Leinfellner et al. beschreiben in der europäischen Patentanmeldung, Appl.No. EP 06/018.945.3 ein Verfahren, die oben genannte Beeinflussung nicht von einem Experimentier-PC, sondern direkt auf der Testvorrichtung vorzunehmen. Insbesondere kennzeichnend für das Verfahren ist, dass wenigstens ein Testmodell nebem dem Umgebungsmodell auf der Testvorrichtung ausgeführt wird, eine gewisse funktionale Unabhängigkeit vorhanden ist und - im Testbetrieb - das Testmodell synchron zum Umgebungsmodell im Sinne des dort beschriebenen Verfahrens ausgeführt wird.

Die beschriebene synchrone Ausführung zweier Modelle auf einer Testvorrichtung benötigt in einem exemplarischen Experimentaufbau, welchem eine spezifizierte Berechnungs- und Abtastfrequenz zugrunde liegt, ein die Synchronisierung steuerndes Modell bzw. einen die Ausführung beider Modelle steuernden übergeordneten Mechanismus. Ein solcher Mechanismus kann beispielsweise einen Zeitgeber umfassen, welcher zu Beginn einer auf der Berechnungs- und Abtastfrequenz fußenden Zeiteinheit die Ausführung des für diese Zeiteinheit relevanten Umgebungs- und Testmodellanteils bewirkt. Weiterhin kann ein solcher Mechanismus Mittel enthalten, welche das Einhalten von Echtzeitkriterien überprüfen und beispielsweise bei Überschreiten der zulässigen Zeiteinheiten Fehlereinträge vornehmen oder weitere, zu spezifizierende Aktionen ausführen. Insbesondere Aufgabenstellungen mit sehr strengen Anforderungen an Echtzeitbedingungen und Synchronität können mit dieser Vorgehensweise sehr viel genauer gelöst werden als in den herkömmlichen Verfahren, eine Testvorrichtung von einem Experimentier-PC aus zu bedienen.

Die Entwicklung von Testmodellen - z.B. mittels herkömmlicher Programmiersprachen, oder aber durch grafische Notation (z.B. mittels aufgeführter Simulink-Software) - wird durch Verwendung der erwähnten Beschreibung des Modells wesentlich vereinfacht. In einem gewöhnlichen Entwicklungsprozess kann unter Verwendung der in der Beschreibung aufgeführten Bezeichner der einzelnen Umgebungsmodellbestandteile (Blöcke) ein - im Verhältnis zur konkreten Verwendung von physikalischen Speicheradressen - besser lesbareres Testmodell erstellt werden. Erst zur Ausführungszeit (oder bei Kompilierung) des so erstellten Testmodells werden die verwendeten Bezeichner in die korrespondierende physikalische Speicheradresse umgewandelt.

Insbesondere ermöglicht die konsequente Verwendung gleicher Bezeichner bei verschiedensten Aufgaben in einem Testvorgang gute Übersichtlichkeit; nachteilig hingegen ist, dass eine bei Kompilierung eines Umgebungsmodells erzeugte Beschreibung einen zum Umgebungsmodell vergleichbaren ähnlichen statischen Charakter hat. Wünschenswert ist also eine dynamische Verwendung der Bezeichner in einem gesamten Testaufbau.

Aufgabe und Ziel der vorliegenden Erfindung ist also, ein Verfahren und eine Vorrichtung zur dynamischen Behandlung von Objekten anzubieten, bei denen die oben genannten Nachteile - zumindest teilweise - vermieden werden.

Die zuvor gezeigte Aufgabe ist erfindungsgemäß nach einer ersten Lehre der Erfindung bei einem Verfahren zur dynamischen Behandlung von Objekten in einem Testaufbau, wobei der Testaufbau aus mindestens zwei bidirektional austauschenden Systemen und wenigstens einem weiteren, zu testenden System besteht, wobei Objekte einer ersten Art zu einem auf einem ersten System ausgeführten Umgebungsmodell gehören und diese Objekte von einem Testmodell verarbeitet werden können, dadurch gelöst, dass zu den Objekten der ersten Art typengleiche oder typenähnliche Objekte einer zweiten Art erzeugt und die Objekte einer ersten und einer zweiten Art mittels einer Management-Vorrichtung wenigstens einem der Systeme zur Verfügung gestellt werden.

Das erfindungsgemäße Verfahren zeichnet sich gegenüber den aus dem Stand der Technik bekannten und beschriebenen Verfahren in vielerlei Hinsicht als vorteilhaft aus. Der Nachteil mangelnder Dynamik bei statischen Beschreibungen, bzw. statischen Objekten einer ersten Art, wird durch die Möglichkeit, Objekte einer zweiten Art, die gemäß einer ersten Lehre typengleich oder typenähnlich sind, dynamisch zu erzeugen, beseitigt.

Die Objekte einer zweiten Art entsprechen gemäß einer ersten Lehre der Erfindung wenigstens strukturell den Objekten einer ersten Art. In einem dem Erfindungsgedanken zu Grunde liegenden üblichen Anwendungsfall werden - wie beschrieben - physikalische Speicheradressen durch rechnergestützte Auflösung der Objekte ermittelt. Gemäß dem von Leinfellner et al. beschriebenen Verfahren kann diese rechnergestützte Auflösung von Objekten einer ersten Art auch auf der Testvorrichtung selbst vorgenommen werden. Im Sinne der Erfindung ist nun, Objekte einer zweiten Art zu erzeugen.

Dies wird exemplarisch an einem fiktiven Beispiel erläutert. Aufgabenstellung des Beispiels ist, in dem eingangs vorgestellten simplen Modell eine Modifikation vorzunehmen, so dass der Ausgabewert der Multiplikation um einen regelbaren Faktor verändert wird.

Eine dem von Leinfellner et al. beanspruchten Verfahren entsprechende Lösung besteht beispielsweise darin, ein Testmodell zu entwerfen, welches - zyklisch unter Einhaltung der modellrelevanten Echtzeitkriterien aufgerufen - den Ausgangswert des Multiplikationsblocks "simple.mod.op_block_01" liest, mit dem Faktor multipliziert und das Ergebnis auf den Ausgabeblock "simple.mod.out_01" ausgibt. Wünschenswert ist aber gemäß o.g. Aufgabenstellung, dass der Faktor steuerbar sein soll.

Dazu eignet sich die Verwendung einer Experimentier-Software, wie aus dem Stand der Technik bekannt. Diese kann unter Einbezug der Objekte der ersten Art die zugehörigen physikalischen Speicheradressen ermitteln und mit (neuen) Werten belegen. Der Zugriff auf den im Testmodell implementierten Faktor ist auf diese Art nicht möglich.

Erfindungsgemäß wird nun die Aufgabe im Testmodell z.B. gelöst, indem ein Objekt einer zweiten Art erzeugt wird, welches über den Bezeichner "simple.mod.gain_block-01" angesprochen wird und einen Parameter "faktor" beinhaltet, der beispielsweise einen Initialwert von 1 hat. Mittels einer Management-Vorrichtung wird dieses Objekt in einer beispielhaften Ausführung dem Experimentier-PC zur Verfügung gestellt. Dort kann wie oben beschrieben in Kenntnis des Objekt-Bezeichners die zugehörige physikalische Adresse des - hier z.B. Gain-Blocks, also ein Verstärker (Multiplikator) - Faktors ermittelt werden und dieser z.B. mittels Schiebereglern modifiziert werden. Die im Testmodell vorgesehene Anweisung, den Ausgangswert des Multiplikationsblocks "simple.mod.op-block-01" mit einem Faktor zu multiplizieren und das Ergebnis auszugeben, bleibt, ergänzt durch die genannte Vorgehensweise, erhalten.

Eine weitere Ausgestaltung des erfindungsgemäßen Verfahrens zeichnet sich dadurch aus, dass die Objekte der zweiten Art insbesondere durch das Testmodell oder Teile des Testmodells erzeugt werden bzw. durch diese die Erzeugung initiiert wird. Gemäß dem beschriebenen Testaufbau wird ein Testmodell auf der Testvorrichtung zur Ausführung gebracht; gleichermaßen ist aber auch - in Abgrenzung zu dieser Ausgestaltung - denkbar, dass die Erzeugung neuer Objekte durch weitere Experimentier-Systeme oder weitere Systeme vorgenommen oder initiiert wird.

Eine besonders bevorzugte Ausgestaltung des erfindungsgemäßen Verfahrens sieht vor, dass die Existenz der Objekte der zweiten Art an die Ausführung bzw. den Start des Testmodells bzw. von Teilen des Testmodells gekoppelt ist, und demzufolge in weiteren besonders bevorzugten Ausgestaltungen die Objekte der zweiten Art bei oder nach Beendigung des Testmodells gelöscht werden; des weiteren ist vorgesehen, dass das Testmodell Änderungen an den Objekten der zweiten Art vornehmen kann.

Die Objekte der zweiten Art sind in der Regel - gemäß dem der Erfindung zu Grunde liegenden Verfahren - an eine weitere Behandlung durch eine beliebig gestaltete Vorschrift - idealerweise eine durch ein Testmodell repräsentierte, einem regelungstechnischen Zusammenhang entnommene Aufgabenstellung - gekoppelt. Sofern also diese Vorschrift in einem Gesamtexperiment nicht weiter existent ist, wird das Objekt der zweiten Art erfindungsgemäß gelöscht.

In einer weiteren bevorzugten Ausgestaltung können Objekte einer zweiten Art mit weiteren Objekten - einer ersten und/ oder zweiten Art - verknüpft werden. Vorteilhaft im Sinne der Erfindung ist, Funktionalität eines Umgebungsmodells mittels Funktionalität eines Testmodells zu überbrücken. Beispielsweise kann - bezugnehmend auf das oben erwähnte Beispiel - der Multiplikationsblock "simple.mod.op_block_01" durch eine andere Rechenvorschrift ersetzt werden. Dazu wird ein Objekt einer zweiten Art erzeugt, welches an die modifizierte Berechnungsvorschrift gemäß der Aufgabenstellung gekoppelt ist. Dieses Objekt wird dann in der Berechnungsvorschrift oder auf anderem Wege mit dem gewünschten Ausgabeblock - hier beispielsweise ein Objekt einer ersten Art: "simple.mod.out-01" - verknüpft, so dass die Wertübergabe - idealerweise unter Berücksichtigung des von Leinfellner et al. beschriebenen Schedulingverfahrens - zyklisch erfolgt. Weitere beliebige bidirektionale Kombinationen aus Objekten einer ersten und zweiten Art sind in den Grenzen möglicher Berechnungsvorschriften denkbar.

Denkbar sind weiterhin Varianten, in denen zur Vorbereitung von Experimenten oder zur Nachbehandlung größerer Ergebnismengen die erzeugten Objekte einer zweiten Art zur Weiterbearbeitung und/ oder Kontrolle zur Verfügung gestellt werden.

Nach einer weiteren bevorzugten Ausgestaltung des erfindungsgemäßen Verfahrens werden die Informationen über die Objekte einer ersten und zweiten Art sowie die Modifikationen der Objekte einer zweiten Art mittels einer Management-Vorrichtung verwaltet und weiteren Systemen im Testaufbau zur Verfügung gestellt.

Die nach einer bevorzugten Ausführung auf der Testvorrichtung verortete Management-Vorrichtung stellt die Objekte der ersten und zweiten Art zur weiteren Verwendung bereit. Diese Management-Vorrichtung wird in einer besonders bevorzugten Ausführung unmittelbar oder mittelbar durch das Testmodell bzw. einen das Testmodell ausführenden Mechanismus kontrolliert; dieser Mechanismus oder das Testmodell legen Informationen über Objekte der zweiten Art in der Management-Vorrichtung ab. Die Management-Vorrichtung meldet gemäß der Ausführung diese Informationen und/ oder die Präsenz von Informationen aktiv an weitere Systeme, beispielweise mittels Trigger-Signalen; gemäß einer weiteren Ausführung ist denkbar, dass die Management-Vorrichtung zyklisch durch weitere Systeme abgefragt wird, also erst nach Anforderung meldet; alternativ dass die Management-Vorrichtung die Meldung bzw. die Informationen in einem Speicher bereitstellt.

Das erfindungsgemäße Verfahren und die Vorrichtung sind in weiteren bevorzugten Ausführungsbeispielen weiterhin so ausgestaltet, dass damit die Verfahrensschritte durchführbar sind, die im Rahmen dieser Erfindung beschrieben sind.

Im Einzelnen gibt es nun eine Vielzahl von Möglichkeiten, das erfindungsgemäße Verfahren und die Management-Vorrichtung auszugestalten und weiterzubilden. Dabei wird sowohl auf die den Patentansprüchen 1 und 10 nachgeordneten Patentansprüche als auch auf die Beschreibung von in der Zeichnung dargestellten Ausführungsbeispielen des erfindungsgemäßen Verfahrens verwiesen. In den Zeichnungen zeigen
- Fig. 1: eine schematische Darstellung eines einfachen Modells,
- Fig. 2: eine schematische Darstellung eines einfachen Modells, erweitert um eine Komponente, die einem Objekt einer zweiten Art entspricht, insbesondere bezogen auf die Ansprüche 1-9,
- Fig. 3: eine schematische Darstellung eines dem Erfindungsgedanken zu Grunde liegenden Testaufbaus, bestehend aus zwei bidirektional operierenden Systemen und einem weiteren, zu testenden System und
- Fig. 4: eine schematische Darstellung einer Testvorrichtung im Sinne der vorliegenden Erfindung unter Berücksichtigung einer Management-Vorrichtung gemäß der Ansprüche, insbesondere bezogen auf das Verfahren laut Anspruch 1.

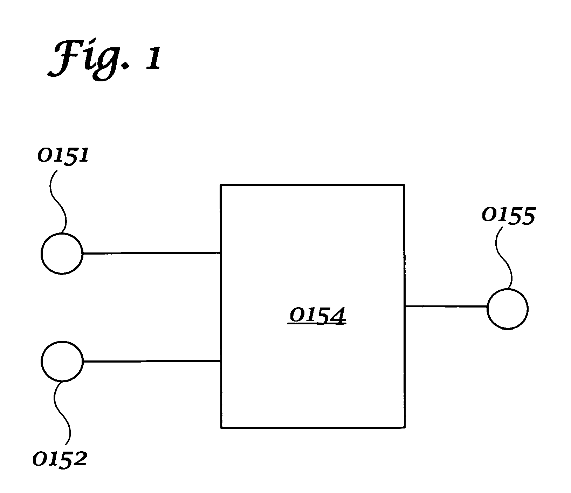

Die Figuren 1 bis 4 zeigen anhand verschiedener Ausführungsbeispiele jeweils bestimmte Aspekte des erfindungsgemäßen Verfahrens und der erfindungsgemäßen Vorrichtung. Aus Gründen der Übersichtlichkeit wurde in den Figuren und Beschreibungen zu den Figuren zu Gunsten eines besseren Verständnisses eine reduzierte Darstellung der bevorzugten Ausführungsbeispiele dargebracht.

Fig. 1 zeigt schematisch ein simples Modell in grafischer Notation. Ein im Kontroll- und Datenfluss zuvorderst gelagertes Element 0151, 0152 - beispielsweise eine Datenquelle - gibt die erhaltenen Werte an das nächste Element 0154 - beispielsweise ein Multiplikationsblock wie im oben beschriebenen Beispiel - weiter. Dieser führt die integrierte Operation - hier also eine Multiplikation der aus den Elementen 0151, 0152 erhaltenen Werte - aus und gibt das erhaltene Ergebnis auf ein ausgebendes Element 0155 - beispielsweise eine Datensenke - aus.

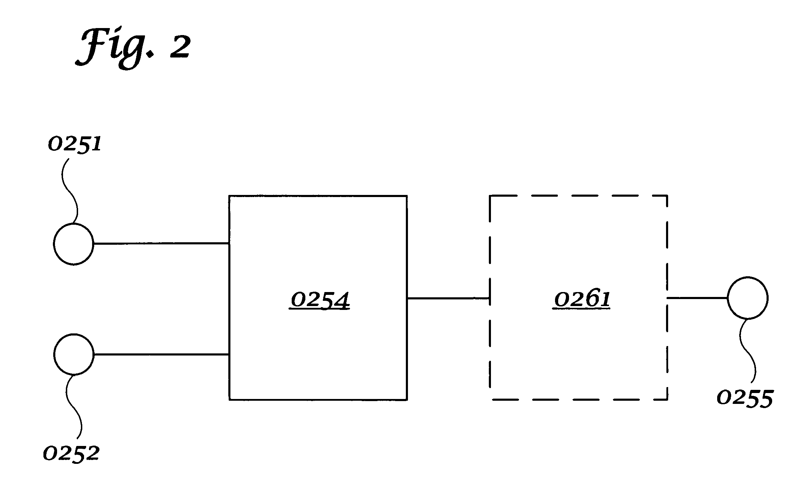

Fig. 2 zeigt schematisch, wie nach der erfindungsgemäßen Lehre ein zu einem so bezeichneten Objekt einer zweiten Art korrespondierender, real nicht existierender Block 0261 - beispielsweise in Form eines Verstärkers wie im oben beschriebenen Beispiel - aus Sicht des Anwenders in das existierende Umgebungsmodell (bestehend aus 0251, 0252, 0254, 0255) integriert wird. Im vorliegenden Ausführungsbeispiel etwa enthält der real nicht existierende Block 0261 eine Berechnungsvorschrift, welche das Ergebnis der Multiplikation des Blocks 0254 beeinflusst und dieses beeinflusste, neue Ergebnis auf den Block 0255 ausgibt. In einer weiteren, nicht dargestellten ausgeprägten Ausgestaltung der Erfindung wäre etwa im fiktiven Block 0261 ein weiteres Objekt einer zweiten Art, einen Block repräsentierend, der in Form einer Konstante den Faktor des Verstärkers beinhaltet; dieses weitere Objekt ließe sich beispielsweise unter Kenntnis des verwendeten Bezeichners aus einer Experimentier-Software heraus beeinflussen - denkbar wäre aber auch die Beeinflussung durch weitere Komponenten eines Testmodells.

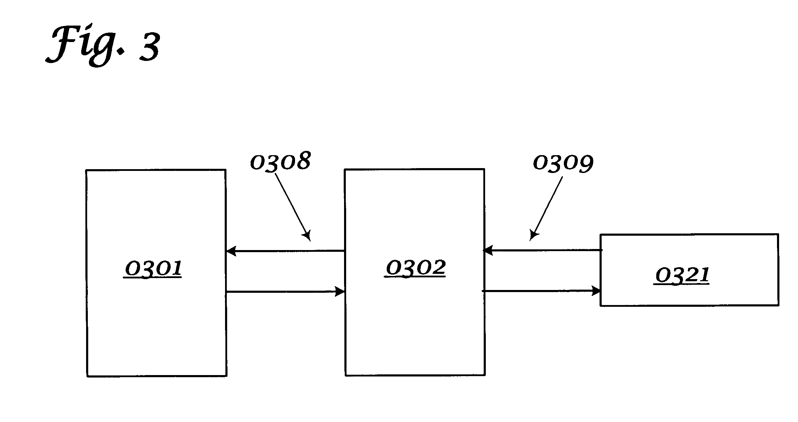

In Fig. 3 ist ein Testaufbau im Sinne der vorgestellten Erfindung dargebracht. Eine zu testende Einheit 0321 ist bidirektional über Datentransfermittel 0309 mit einer Testvorrichtung 0302 verbunden, diese wiederum wechselwirkt über Datentransfermittel 0308 mit einem weiteren System 0301, vorzugsweise einem Experimentier-PC. Ein besonderer Mehrwert der vorliegenden Erfindung entsteht, wenn in einem Testaufbau eine Testvorrichtung 0302 und ein Experimentier-PC 0301 miteinander wechselwirken. Insbesondere ist besonders vorteilhaft, die mittels Bezeichner ansprechbaren physikalischen Speicherorte der Objekte einer zweiten Art durch Experimentier-Software und/ oder Test-Software und/ oder weitere Testmodelle im Sinne der von Leinfellner et al. vorgelegten Erfindung zu verwenden.

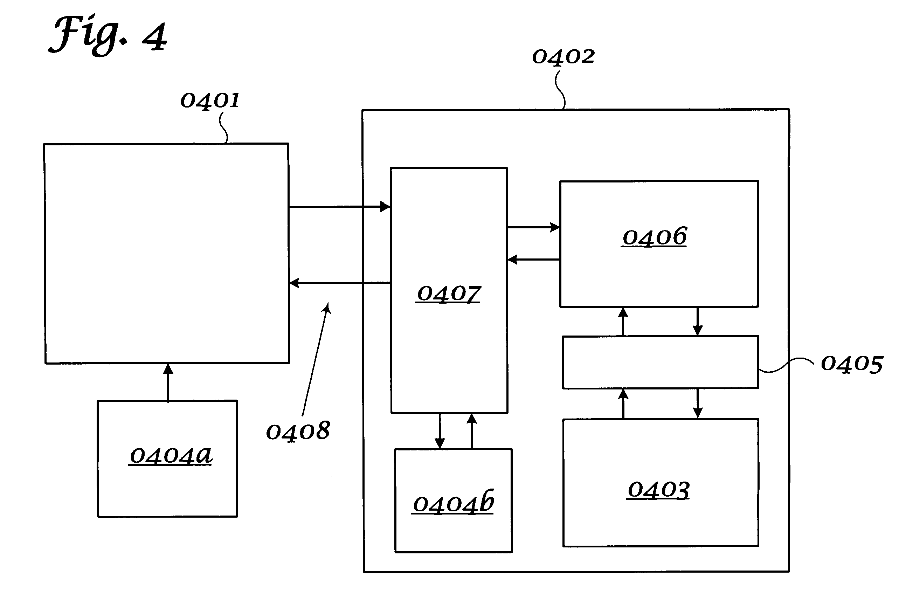

Fig. 4 zeigt schematisch verschiedene Details eines Testaufbaus sowie weitere, einem Testaufbau dem Wesen nach zu Grunde liegende Bestandteile. Insbesondere sind dargestellt ein System, hier ein Experimentier-System 0401, welchem die im Beispiel in Form einer separierten Datei vorliegende Beschreibung 0404a zur Verfügung steht, weiterhin eine Testvorrichtung 0402 mit physikalischem Speicher 0405, ein ausgeführtes Umgebungsmodell 0403, ein ausgeführtes Testmodell 0406 sowie eine Management-Vorrichtung 0407 zur Behandlung von Objekten einer ersten und zweiten Art, ferner eine den Inhalt der Beschreibung 0404a wiedergebende korrespondierende Beschreibung 0404b, welche der Management-Vorrichtung zur Verfügung steht. Ferner sind (nicht erschöpfend) verschiedene Datenflüsse zwischen den aufgeführten Objekten innerhalb der Testvorrichtung 0402 aufgeführt.

### Bezugszeichenliste

Buchstabenindizes verweisen in der Regel auf mehrere Vorkommnisse eines Typs oder typengleiche oder -ähnliche Varianten.
- 0151: Schematische Darstellung eines Eingangsblocks
- 0152: Schematische Darstellung eines Eingangsblocks
- 0154: Schematische Darstellung eines Operationsblocks
- 0155: Schematische Darstellung eines Ausgabeblocks
- 0251: Schematische Darstellung eines Eingabeblocks
- 0252: Schematische Darstellung eines Eingabeblocks
- 0254: Schematische Darstellung eines Operationsblocks
- 0255: Schematische Darstellung eines Ausgabeblocks
- 0261: Schematische Darstellung eines Blocks im Sinne eines Objektes nach einer zweiten Art
- 0301: Experimentier-System
- 0302: Testvorrichtung
- 0308: Datentransfermittel zwischen Experimentier-System und Testvorrichtung gemäß Anspruch 1
- 0309: Datentransfermittel zwischen Testvorrichtung und zu testendem System
- 0321: Zu testendes System
- 0401: Experimentier-System
- 0402: Testvorrichtung
- 0403: Ausgeführtes Umgebungsmodell
- 0404: a: Beschreibung der Objekte erster Art als separate Datei
- 0404: b: Beschreibung der Objekte erster Art als abrufbare Datenquelle auf der Testvorrichtung
- 0405: Physikalischer Speicher auf der Testvorrichtung
- 0406: Ausgeführtes Testmodell
- 0407: Management-Vorrichtung gemäß vorliegender Erfindung
- 0408: Aktive bzw. passive Bereitstellung gemäß Anspruch 11

## Patentansprüche

1. Verfahren zur dynamischen Behandlung von Objekten in einem Testaufau, wobei der Testaufbau aus mindestens zwei bidirektional austauschenden Systemen und wenigstens einem weiteren, zu testenden System besteht, wobei Objekte einer ersten Art zu einem auf einem ersten System ausgeführten Umgebungsmodell gehören und diese Objekte von einem Testmodell verarbeitet werden können,
**dadurch gekennzeichnet, dass**
zu den Objekten der ersten Art typengleiche oder typenähnliche Objekte einer zweiten Art erzeugt werden und die Objekte einer ersten und einer zweiten Art mittels einer Management-Vorrichtung wenigstens einem der Systeme zur Verfügung gestellt werden.

2. Verfahren nach Anspruch 1, **dadurch gekennzeichnet, dass** das Erzeugen von Objekten der zweiten Art durch das Testmodell und/ oder funktionale Bestandteile des Testmodells initiiert und/ oder ausgeführt wird.

3. Verfahren nach einem der vorherigen Ansprüche, **dadurch gekennzeichnet, dass** das Erzeugen von Objekten einer zweiten Art durch das Testmodell und/ oder funktionale Bestandteile des Testmodells beim Start des Testmodells oder zur Laufzeit des Testmodells initiiert und/ oder ausgeführt wird.

4. Verfahren nach einem der vorherigen Ansprüche, **dadurch gekennzeichnet, dass** die Objekte der zweiten Art mit Beenden des Testmodells gelöscht werden.

5. Verfahren nach einem der vorherigen Ansprüche, **dadurch gekennzeichnet, dass** Objekte einer zweiten Art durch das Testmodell gelöscht oder verändert werden.

6. Verfahren nach einem der vorherigen Ansprüche, **dadurch gekennzeichnet, dass** das Anlegen, Ändern oder Löschen von Objekten einer zweiten Art mittels der Management-Vorrichtung weiteren Systemen zur Verfügung gestellt wird.

7. Verfahren nach einem der vorherigen Ansprüche, **dadurch gekennzeichnet, dass** Objekte einer zweiten Art mit weiteren Objekten einer zweiten Art und/ oder Objekten einer ersten Art verknüpfbar sind.

8. Verfahren nach einem der vorherigen Ansprüche, **dadurch gekennzeichnet, dass** ein Objekt einer zweiten Art in Form von Berechnungsvorschriften und/ oder Funktionen implementiert ist.

9. Verfahren nach einem der vorherigen Ansprüche, **dadurch gekennzeichnet, dass** das zweite System ein zur Ausführung von Experimentier-Software geeigneter Standard-PC ist.

10. Verfahren nach einem der vorherigen Ansprüche, **dadurch gekennzeichnet, dass** eine Management-Vorrichtung die Bereitstellung der Informationen über die Objekte der ersten und zweiten Art aktiv oder passiv vornimmt.

11. Management-Vorrichtung nach einem der vorherigen Ansprüche, **dadurch gekennzeichnet, dass** Aufruf und Beendigung der Management-Vorrichtung an das Starten und Beenden des Testmodells gekoppelt ist.
